# EUROPÄISCHE PATENTSCHRIFT

(11) **EP 4 382 646 B1**
(45) Veröffentlichungstag und Bekanntmachung des Hinweises auf die Patenterteilung: **20.08.2025**
(21) Anmeldenummer: 23213182.1
(22) Anmeldetag: 30.11.2023
(51) Int. Cl.: D01H 5/18

(54) **STRECKWERK UND SYSTEM ZUR SPANNUNG EINES ANTRIEBSRIEMENS EINES STRECKWERKS MIT EINEM STRECKWERK**
DRAFTING UNIT UND A SYSTEM FOR TENSIONING A DRIVE BELT OF A DRAFTING UNIT HAVING A DRAFTING UNIT AND A BELT TENSIONING LEVER
BANC D'ÉTIRAGE ET SYSTÈME DE TENSION D'UNE COURROIE D'ENTRAÎNEMENT D'UN BANC D'ÉTIRAGE DOTÉ D'UN BANC D'ÉTIRAGE ET D'UNE PINCE DE TENSION DE COURROIE

(30) Priorität: 07.12.2022 LU 503149
(43) Veröffentlichungstag der Anmeldung: 12.06.2024
(73) Patentinhaber: Saurer Spinning Solutions GmbH & Co. KG, 52531 Übach-Palenberg (DE)
(72) Erfinder: Toepke, Heiko, 52499 Baesweiler (DE); Reimann, Michael, 41515 Grevenbroich (DE)
(74) Vertreter: Morgenthum-Neurode, Mirko

(56) Entgegenhaltungen:
- EP-A2- 1 496 143
- DE-B- 1 062 587
- DE-U1- 202006 016 722
- DE-U1- 202019 002 487

## Beschreibung

Die Erfindung betrifft ein Streckwerk für eine Spinnmaschine, mit mindestens zwei Walzenpaaren, die jeweils eine Oberwalze und eine Unterwalze aufweisen, und wenigstens einem Antriebsmotor zum Antrieb wenigstens einer der Unterwalzen, wobei der wenigstens eine Antriebsmotor und die von dem wenigstens einen Antriebsmotor antreibbare Unterwalze an einem Unterwalzenträger gelagert angeordnet sind, wobei der wenigstens eine über einen Antriebsriemen mit der Unterwalze verbundene Antriebsmotor zur Einstellung einer Antriebsriemenspannung abstandsveränderlich zur Unterwalze an dem Unterwalzenträger angeordnet ist. Ferner betrifft die Erfindung ein System zur Spannung eines Antriebsriemens eines Streckwerks, mit einem Streckwerk und einer Riemenspannzange.

Streckwerke für Spinnmaschinen sind in vielfältigen Ausgestaltungen aus dem Stand der Technik bekannt. Sie dienen dazu, ein Faserband zu verstrecken, bzw. zu verziehen, wodurch eine Querschnittsreduzierung der Faser bewirkt wird. Während des Verzugs müssen die Fasern dabei möglichst gleichmäßig nebeneinander transportiert werden, um ein gleichmäßiges Faserband zu erreichen, welches Voraussetzung für die Herstellung eines gleichmäßigen Garns ist.

Zur Verstreckung des Faserbands weisen die Streckwerke in der Regel mehrere nacheinander angeordnete Walzenpaare auf, die aneinanderliegend angeordnet das zwischen ihnen verlaufende Faserband einklemmen. Ein Walzenpaar besteht dabei üblicherweise aus einer angetriebenen Unterwalze und einer an der Unterwalze anliegenden oberen Druckwalze. Ein Verzug des Faserbands wird dadurch erreicht, dass in der durch die Drehrichtung der Walzenpaare festgelegten Transportrichtung des Faserbands die Umfangsgeschwindigkeit von Walzenpaar zu Walzenpaar zunimmt.

Zum Antrieb der an einem Unterwalzenträger des Streckwerks drehbar gelagerten Unterwalzen ist es bekannt, hierzu den einzelnen Unterwalzen zugeordnete Antriebsmotoren zu verwenden, welche die Unterwalzen über einen Antriebsriemen antreiben. Ein solches Streckwerk ist beispielsweise aus dem Dokument DE 1062587 B bekannt. Um eine zuverlässige Kraftübertragung von dem Antriebsmotor auf die Unterwalze zu gewährleisten, ist es erforderlich, dass der den Antriebsmotor und die Unterwalze verbindende Antriebsriemen eine vorgegebene Antriebsriemenspannung aufweist.

Zur Einstellung der Antriebsriemenspannung ist bei bekannten Streckwerken der Antriebsmotor längsverschiebbar auf einer Motorplatte montiert. Eine Längsverschiebung bewirkt dabei eine Abstandsveränderung zwischen dem Antriebsmotor und der Unterwalze, worüber die Antriebsriemenspannung einstellbar ist. Der Antriebsmotor wird hierzu an der Motorplatte in eine für die erforderliche Antriebsriemenspannung vorgegebene Position an der Motorplatte verschoben und dort mittels geeigneter Befestigungsmittel fixiert.

Bei der Fixierung des Antriebsmotors können Fehlstellungen auftreten, weshalb es erforderlich ist, nach jedem Spannvorgang die Antriebsriemenspannung zu überprüfen, wobei hierzu üblicherweise aufwendige Frequenzmessungen durchgeführt werden müssen. Diese sind, insbesondere bei Streckwerken, bei denen die einzelnen Unterwalzen über unterschiedliche Riemenlängen mit den Antriebsmotoren verbunden sind, sehr kosten- und zeitintensiv.

Hiervon ausgehend liegt der Erfindung die Aufgabe zugrunde, ein Streckwerk sowie ein System aus Streckwerk und Riemenspannzange bereitzustellen, welches eine einfache Einstellung der Antriebsriemenspannung ermöglichen.

Die Erfindung löst die Aufgabe durch ein Streckwerk mit den Merkmalen des Anspruchs 1sowie durch ein System zur Spannung eines Antriebsriemens eines Streckwerks, mit einem Streckwerk und einer Riemenspannzange mit den Merkmalen des Anspruchs 11. Bevorzugte Weiterbildungen der Erfindung sind in den abhängigen Ansprüchen angegeben.

Kennzeichnend für das erfindungsgemäße Streckwerk ist, dass der wenigstens eine Antriebsmotor der mindestens einen drehbar an dem Unterwalzenträger gelagerten Unterwalze zur Einstellung seines Abstands von der zugeordneten Unterwalze um eine Drehachse schwenkbar und in einer eingestellten Position festlegbar an dem Unterwalzenträger gelagert ist. Erfindungsgemäß ist demnach vorgesehen, dass der Antriebsmotor auch während der Einstellung seiner Position über die Drehachse ortsfest mit dem Unterwalzenträger verbunden ist. Die Drehachse verläuft dabei derart an dem Unterwalzenträger, dass durch eine Verschwenkung des Antriebsmotors um die Drehachse eine Abstandsveränderung des Antriebsmotors von der Unterwalze, bzw. einer Antriebswellenachse des Antriebsmotors von einer Rotationsachse der Unterwalze bewirkt wird. Die ortsfeste Anordnung des Antriebsmotors über die Drehachse ermöglicht es somit, den gegenüber dem Unterwalzenträger verschwenkbaren Antriebsmotor komfortabel in die Position zu verschwenken, in welcher der für die erforderliche Antriebsriemenspannung notwendige Abstand von Antriebsmotor und Unterwalze vorliegt. Eine dauerhafte Beibehaltung der Verbindung des Antriebsmotors mit dem Unterwalzenträger über die Drehachse verhindert dabei zuverlässig ein Verkippen des Antriebsmotors, in deren Folge die Antriebsriemenspannung in der eingestellten Position von der hierfür vorgesehenen Antriebsriemenspannung abweicht. Zur Einstellung der Antriebsriemenspannung können bspw. an dem Unterwalzenträger Markierungen vorgesehen sein, welche bei einer entsprechenden Positionierung des Antriebsmotors entsprechenden Antriebsriemenspannungen zugeordnet sind. Das erfindungsgemäße Streckwerk ermöglicht somit eine besonders einfache und zuverlässige Einstellung der Antriebsriemenspannung und gewährleistet somit einen zuverlässigen Betrieb des Streckwerks. Dadurch können zudem insbesondere Umfangstoleranzen, bspw. zwischen verschiedenen Fertigungschargen der Antriebsriemen, kompensiert werden.

Grundsätzlich besteht die Möglichkeit, sowohl die Drehachse, über die der Antriebsmotor an dem Unterwalzenträger gelagert ist, als auch die Unterwalze sowie den Antriebsmotor derart anzuordnen, dass deren Antriebswellenachsen und Rotationsachsen verschiedene Ausrichtungen aufweisen. Nach einer bevorzugten Ausgestaltung der Erfindung ist jedoch vorgesehen, dass der wenigstens eine Antriebsmotor derart schwenkbar an dem Unterwalzenträger gelagert ist, dass die Drehachse, die Antriebswellenachse des wenigstens einen Antriebsmotors sowie die Rotationsachse der zugeordneten Unterwalze parallel zueinander angeordnet sind. Diese Ausgestaltung der Erfindung gewährleistet sowohl eine einfache Einstellbarkeit der Antriebsriemenspannung als auch eine zuverlässige Kraftübertragung von dem Antriebsmotor auf die Unterwalze. Darüber hinaus gewährleistet eine entsprechende Ausgestaltung, dass die Antriebsriemenspannung in Abhängigkeit von der Verschwenkbewegung proportional zur Verschwenkung des Antriebsmotors um die Drehachse zu- bzw. abnimmt.

Der Umfang der Verstellbarkeit des Antriebsmotors an dem Unterwalzenträger, nämlich die Verschwenkbarkeit des Antriebsmotors um die Drehachse, kann grundsätzlich in beliebiger Weise ausgebildet sein. Nach einer bevorzugten Ausgestaltung der Erfindung ist jedoch vorgesehen, dass der wenigstens eine Antriebsmotor zwischen einer einen maximalen Abstand zur Unterwalze festlegenden Endposition und einer einen minimalen Abstand zur Unterwalze festlegenden Anfangsposition verstellbar an dem Unterwalzenträger angeordnet ist. Eine entsprechende Ausgestaltung der Erfindung gewährleistet, dass der Antriebsriemen bei einem im Bereich der Anfangsposition angeordneten Antriebsmotor komfortabel an dem Antriebsmotor und der zugeordneten Unterwalze angeordnet werden kann. Darüber hinaus gewährleistet die Endposition, dass die Antriebsriemenspannung eine Maximalspannung nicht überschreitet. Darüber hinaus wird durch den begrenzten Verstellbereich des Antriebsmotor Fehlpositionierungen, die zu Beschädigungen des Antriebsmotors oder benachbarter Aggregate des Streckwerks führen könnten, zuverlässig vermieden.

Die Ausrichtung des Antriebsmotors, insbesondere der Drehachse gegenüber der Unterwalze an dem Unterwalzenträger kann grundsätzlich in beliebiger Weise erfolgen, sofern gewährleistet ist, dass bei einer Verschwenkung der Antriebsmotoren um deren Drehachse eine Abstandsveränderung zwischen dem Antriebsmotor und der Unterwalze erfolgt. Nach einer bevorzugten Ausgestaltung der Erfindung ist vorgesehen, dass der Antriebsmotor derart schwenkbar an dem Unterwalzenträger angeordnet ist, dass in einer einen übereinstimmenden Abstand von der Anfangs- und Endposition aufweisenden Mittenposition eine durch die Drehachse und die zugeordnete Antriebswellenachse aufgespannte Ebene senkrecht zu einer durch die zugeordnete Antriebswellenachse und die Rotationsachse der zugeordneten Unterwalze aufgespannten Ebene verläuft.

Durch diese Ausgestaltung der Erfindung wird gewährleistet, dass Verstellbewegungen des Antriebsmotors ausgehend von der Mittenposition in Richtung auf die End- oder Anfangsposition in übereinstimmenderweise die Antriebsriemenspannung erhöhen oder verringern. In beide Verstellrichtungen ist der Verstellweg übereinstimmend proportional zur Erhöhung oder Verringerung der Antriebsriemenspannung. Darüber hinaus gewährleistet eine entsprechende Ausgestaltung eine sehr kompakte Ausgestaltung des Streckwerks sowie eine gute Zugänglichkeit zu den Antriebsmotoren, sodass die Antriebsriemenspannung in komfortabler Weise eingestellt werden kann.

Die Verstellung des Antriebsmotors zur Einstellung der Antriebsriemenspannung kann grundsätzlich in beliebiger Weise erfolgen. Nach einer bevorzugten Ausgestaltung der Erfindung ist vorgesehen, dass der Antriebsmotor einen sich parallel zu einem zugeordneten Haltebolzen an den Unterwalzenträger erstreckenden Aufsteckbolzen aufweist, wobei der Haltebolzen und der zugeordnete Aufsteckbolzen derart in einem Abstand voneinander angeordnet sind, dass deren Abstandsveränderung eine Verstellung des Antriebsmotors zwischen der Anfangsposition und der Endposition bewirkt.

Gemäß dieser bevorzugten Ausgestaltung der Erfindung ist an dem Unterwalzenträger dem wenigstens einen Antriebsmotor bzw. bei mehr als einem Antriebsmotor in bevorzugter Weise jedem Antriebsmotor ein Haltebolzen zugeordnet, der ortsfest an dem Unterwalzenträger angeordnet ist. Des Weiteren weist der wenigstens eine Antriebsmotor bzw. bei mehr als einem Antriebsmotor in bevorzugter Weise jeder Antriebsmotor einen Aufsteckbolzen auf, welcher sich parallel zu den jeweiligen Haltebolzen erstreckt. Über eine Abstandsveränderung des Aufsteckbolzens zum Haltebolzen kann somit eine Positionierung des Antriebsmotors vorgenommen werden. Diese Ausgestaltung der Erfindung ermöglicht es somit, bspw. Lehren zu verwenden, welche mit Öffnungen für den Aufsteckbolzen und den Haltebolzen versehen sind. Der Abstand der Öffnungen ist dabei definierten Antriebsriemenspannungen zugeordnet, sodass die Lehren sowohl zur Einstellung als auch zur Kontrolle der Antriebsriemenspannung verwendet werden können. Zur Einstellung der Antriebsriemenspannung ist es lediglich erforderlich, den Aufsteckbolzen derart gegenüber dem Haltebolzen anzuordnen, dass diese mit den in der Lehre angeordneten Öffnungen übereinstimmen.

Darüber hinaus ermöglichen der Haltebolzen und der Aufsteckbolzen ferner die Verwendung eines an diese angepassten Werkzeugs zur Einstellung des Abstands von Haltebolzen und Aufsteckbolzen und damit zur zuverlässigen Einstellung der Antriebsriemenspannung. Gemäß einer bevorzugten Ausgestaltung erstreckt sich dabei der Aufsteckbolzen durch eine Aussparung an dem Unterwalzenträger, wobei die Aussparung bspw. als Langloch ausgebildet ist, durch das in komfortabler Weise sowohl eine zuverlässige Führung des Aufsteckbolzens gewährleistet, als auch die End- und Anfangspositionen exakt festgelegt werden können.

Nach einer bevorzugten Ausführungsform weist der Unterwalzenträger eine Ober- und eine Unterseite auf, wobei die Unterwalzen auf der Oberseite des Unterwalzenträgers gelagert angeordnet sind, und ein von der Unterseite zu dieser vertikal abragendes Tragelement vorgesehen ist, an welchem der wenigstens eine Antriebsmotor gelagert ist. Der Antriebsriemen erstreckt sich dabei von dem Antriebsmotor bis zu der zugeordneten Unterwalze die Unter- und Oberseite des Unterwalzenträgers querend. Der Unterwalzenträger und das Tragelement können nach einer bevorzugten Ausführungsform einstückig oder mehrteilig ausgeformt sein. Bei mehrteiliger Ausgestaltung sind der Unterwalzenträger und das Tragelementüber weiter bevorzugt mittels üblicher Verbindungs- und/oder Kopplungselemente miteinander verbunden bzw. gekoppelt.

Gemäß einer bevorzugten Ausführungsform weist der Unterwalzenträger einen Durchgang auf, durch welchen sich der Antriebsriemen erstreckt. Der Durchgang kann in bevorzugter Weise als von einem Rand teilweise oder vollständig eingefasste Öffnung in dem Unterwalzenträger ausgebildet sein. Bei der teilweisen randseitig eingefassten Ausgestaltung formt der die Öffnung umgebende und damit dieser begrenzende Öffnungsrand vorzugsweise gleichzeitig eine Randseite des Unterwalzenträgers aus. Damit wird eine einfache Zugänglichkeit des Durchgangs von der Randseite des Unterwalzenträgers ermöglicht. In äquivalent bevorzugter Weise kann die Aussparung, durch welche vorzugsweise der Aufsteckbolzen hindurchragt, in dem Unterwalzenträger bzw. seinem Tragelement ausgestaltet sein.

Die Festlegung des wenigstens einen Antriebsmotors in der eingestellten Position kann grundsätzlich in beliebiger Weise erfolgen. Nach einer bevorzugten Ausgestaltung der Erfindung ist vorgesehen, dass der Unterwalzenträger hierzu wenigstens eine Aussparung zur Aufnahme wenigstens einer sich durch den Unterwalzenträger erstreckenden, den wenigstens einen Antriebsmotor in der eingestellten Position festlegenden Arretierungsschraube aufweist. Gemäß dieser Ausgestaltung ist vorgesehen, dass zur Festlegung des Antriebsmotors in der eingestellten Position wenigstens eine Schraube durch eine Aussparung an den Unterwalzenträger hindurch mit dem Antriebsmotor verschraubt wird, sodass dieser über die Schraube klemmend in der eingestellten Position an dem Unterwalzenträger fixiert werden kann. Die Aussparung ist dabei derart dimensioniert, dass eine Festlegung des Antriebsmotors in allen, zwischen der Anfangs- und Endposition vorgesehenen Positionierungen des Antriebsmotors erfolgen kann.

Die gemäß einer vorteilhaften Weiterbildung der Erfindung vorgesehene Verwendung von Aufsteckbolzen und Haltebolzen ermöglicht darüber hinaus die Verwendung einer Riemenspannzange zur Einstellung der Antriebsriemenspannung des Streckwerks. Die Riemenspannzange weist dabei zwei über einen Gelenkbolzen verschwenkbar miteinander verbundene Zangenhälften auf, deren einen Enden als Handgriff ausgebildet sind und deren anderen Enden jeweils ein Funktionselement aufweisen, die gemeinsam ein Funktionselementepaar bilden. Die Funktionselemente sind dabei in derselben Bewegungsebene angeordnet und durch Betätigung der Zangenhälften aufeinander zu beweglich. Kennzeichnend für die Riemenspannzange ist dabei ein Vorspannelement, das die als Aufsteckbuchsen zur Aufnahme eines Haltebolzens und eines Aufsteckbolzens ausgebildete, sich senkrecht zur Bewegungsebene erstreckenden Funktionselemente mit einer definierten Vorspannkraft aufeinander zu vorspannt.

Die Ausgestaltung der Riemenspannzange mit Aufsteckbuchsen, welche zur Aufnahme von Haltebolzen und Aufsteckbolzen ausgebildet sind, mittels derer ein Antriebsmotor des Streckwerks gegenüber einer zugeordneten Unterwalze zur Antriebsriemenspannung verstellt werden kann, ermöglicht eine komfortable Einstellung der Antriebsriemenspannung mittels der Riemenspannzange.

Dabei bestimmt das Vorspannelement, welches die Aufsteckbuchsen aufeinander zu vorspannt, den Abstand von Haltebolzen und Aufsteckbolzen und damit die Positionierung des Antriebsmotors an dem Unterwalzenträger. Durch eine entsprechende Auswahl des Vorspannelements wird nach einer Anordnung der Riemenspannzange mit den Aufsteckbuchsen an den zugeordneten Haltebolzen und Aufsteckbolzen die Antriebsriemenspannung in zuverlässiger Weise entsprechend der durch das Vorspannelement aufgebrachten, auf den Antriebsriemen wirkenden Vorspannung automatisiert eingestellt. Nach einer Anordnung der Riemenspannzange kann ohne eine weitere manuelle Verstellung der Zangenhälften der Antriebsmotor in der durch die Riemenspannzange vorgegebenen Position fixiert werden, wodurch eine exakte Positionierung des Antriebsmotors mit der vorgegebenen Antriebsriemenspannung erreicht wird.

Die durch die Riemenspannzange dabei auf den Haltebolzen sowie Aufsteckbolzen und damit auf den Antriebsriemen ausgeübte Spannkraft und damit die Positionierung des Antriebsmotors an dem Unterwalzenträger bestimmt sich dabei in Abhängigkeit von der durch das Vorspannelement erzeugten Vorspannkraft sowie dem Abstand der Aufsteckbuchsen von dem Gelenkbolzen der Riemenspannzange. Eine vorteilhafterweise vorgesehene Austauschbarkeit des Vorspannelements ermöglicht somit eine Anpassung der durch die Riemenspannzange erzeugten Antriebsriemenspannung. Nach einer bevorzugten Ausgestaltung ist vorgesehen, dass die Funktionselemente eines Funktionselementepaares im gleichen Abstand von dem Gelenkbolzen angeordnet sind. Durch diese Ausgestaltung wird einer Fehlbedienung der Riemenspannzange in besonderer Weise vorgebeugt, nachdem es gemäß dieser Ausführung der Erfindung unerheblich ist, an welcher Aufsteckbuchse der Haltebolzen und der Aufsteckbolzen angeordnet sind.

Nach einer weiteren Ausgestaltung ist ferner vorgesehen, dass an den anderen Enden der Zangenhälften mindestens in zwei unterschiedlichen Abständen von dem Gelenkbolzen Funktionselementepaare angeordnet sind. Aufgrund des unterschiedlichen Abstands der Aufsteckbuchsen der mindestens zwei Funktionselementepaare von dem Gelenkbolzen können mit einer Riemenspannzange ohne den Austausch des Vorspannelements entsprechend der Anzahl der Funktionselementepaare unterschiedliche Vorspannungen auf die Haltebolzen und zugeordneten Aufsteckbolzen übertragen werden. Eine entsprechende Ausgestaltung der Riemenspannzange ermöglicht somit auch deren alleinige Verwendung zur Einstellung der Antriebsriemenspannung an Streckwerken, bei denen mehrere Antriebsmotoren mit unterschiedlichen Antriebsriemenspannungen betrieben werden.

Die Ausgestaltung des Vorspannelements ist grundsätzlich frei wählbar, solange dieses eine Vorspannung bewirkt, bei der die Aufsteckbuchsen aufeinander zu vorgespannt sind. Eine solche Vorspannung kann bspw. durch eine im Bereich der Handgriffe angeordnete Druckfeder erzeugt werden. Nach einer bevorzugten Ausgestaltung ist vorgesehen, dass das Vorspannelement als im Bereich zwischen einem Funktionselementepaar und dem Gelenkbolzen an den Zangenhälften angeordnete Zugfeder ausgebildet ist. Die Verwendung einer Zugfeder gewährleistet in besonders einfacher und zuverlässiger Weise eine definierte Vorspannung der Aufsteckbuchsen eines Funktionselementepaares. Darüber hinaus lässt sich die Zugfeder ggf. besonders einfach austauschen, so dass die Riemenspannzange zur Aufbringung unterschiedlicher Spannkräfte verwendet werden kann.

Die Erfindung löst die Aufgabe ferner durch ein System zur Spannung eines Antriebsriemens eines Streckwerks, mit
- einem vorstehend beschriebenen erfindungsgemäßen oder weitergebildeten Streckwerk und
- einer vorstehend beschriebenen Riemenspannzange gemäß wenigstens einer Ausführungsform, wobei
- an der Riemenspannzange angeordnete Aufsteckbuchsen ausbildend einen Aufsteckbolzen und Haltebolzen angepasst sind.

Das erfindungsgemäße System aus Streckwerk und Riemenspannzange erlaubt in besonders einfacher und komfortabler Weise die Einstellung der Antriebsriemenspannung der die Unterwalze mit dem Antriebsmotor verbindenden Antriebsriemen. Besonders vorteilhafterweise ist dabei vorgesehen, dass ein Vorspannelement an der Riemenspannzange derart ausgebildet ist, dass die an dem Haltebolzen und dem Aufsteckbolzen angeordnete Riemenspannzange den Antriebsriemen mit einer vorgegebenen Riemenspannung vorspannt. Ein entsprechendes System aus Streckwerk und Riemenspannzange ermöglicht es somit dem Maschinenbediener in besonders einfacher und komfortabler Weise, den Antriebsriemen mit einer für den Betrieb erforderlichen Antriebsriemenspannung zu versehen. Die Einrichtung eines Streckwerks wie auch die Wartung und Instandhaltung können somit in besonders einfacher Weise erfolgen, nachdem die Riemenspannzange eine zuverlässige Riemenspannung gewährleistet. Diese macht überdies eine nachträgliche Überprüfung der Riemenspannung durch zusätzliches Werkzeug überflüssig.

Nach einer bevorzugten Ausgestaltung der Erfindung weist dabei das Streckwerk wenigstens zwei Walzenpaare mit jeweils einem mit einer Unterwalze verbundenen Antriebsmotor und die Riemenspannzange zwei Funktionselementepaare zur Einstellung unterschiedlicher Riemenspannungen auf. Gemäß dieser Ausgestaltung der Erfindung lassen sich mit der Riemenspannzange über die beiden Funktionselementepaare, welche jeweils in unterschiedlichem Abstand von dem Gelenkbolzen angeordnete Aufsteckbuchsen aufweisen, unterschiedliche Vorspannkräfte auf Aufsteckbolzen und Haltebolzen aufbringen. Dies ermöglicht es, ein Streckwerk mit Antriebsriemen mit voneinander abweichenden erforderlichen Antriebsriemenspannungen mittels einer Riemenspannzange einzustellen. Auf die Verwendung einer separaten Riemenspannzange zur Einstellung der zweiten Antriebsriemenspannung kann gemäß dieser Ausgestaltung der Erfindung verzichtet werden.

Ein Ausführungsbeispiel der Erfindung wird nachstehend mit Bezug auf die Zeichnungen erläutert. In den Zeichnungen zeigen:
- Fig. 1: eine perspektivische Ansicht in schematischer Darstellung einer ersten Ausführungsform eines Streckwerks,
- Fig. 2: eine perspektivische Ansicht in schematischer Darstellung eines Streckwerkunterteils einer zweiten Ausführungsform eines Streckwerks,
- Fig. 3: eine weitere perspektivische Ansicht in schematischer Darstellung des Streckwerkunterteils von Fig. 2,
- Fig. 4: eine perspektivische Ansicht in schematischer Darstellung eines Ausschnitts des Streckwerkunterteils von Fig. 2,
- Fig. 5: eine perspektivische Ansicht in schematischer Darstellung eines ersten Antriebsmotors des Streckwerkunterteils von Fig. 2,
- Fig. 6: eine perspektivische Ansicht in schematischer Darstellung eines zweiten Antriebsmotors des Streckwerkunterteils von Fig. 2,
- Fig. 7: eine perspektivische Ansicht in schematischer Darstellung einer Riemenspannzange nach einem Ausführungsbeispiel,
- Fig. 8: eine perspektivische Ansicht in schematischer Darstellung des Streckwerkunterteils von Fig. 2 in einem ersten Zusammenwirken mit der Riemenspannzange von Fig. 7 und
- Fig. 9: eine perspektivische Ansicht in schematischer Darstellung des Streckwerkunterteils von Fig. 2 in einem zweiten Zusammenwirken mit der Riemenspannzange von Fig. 7.

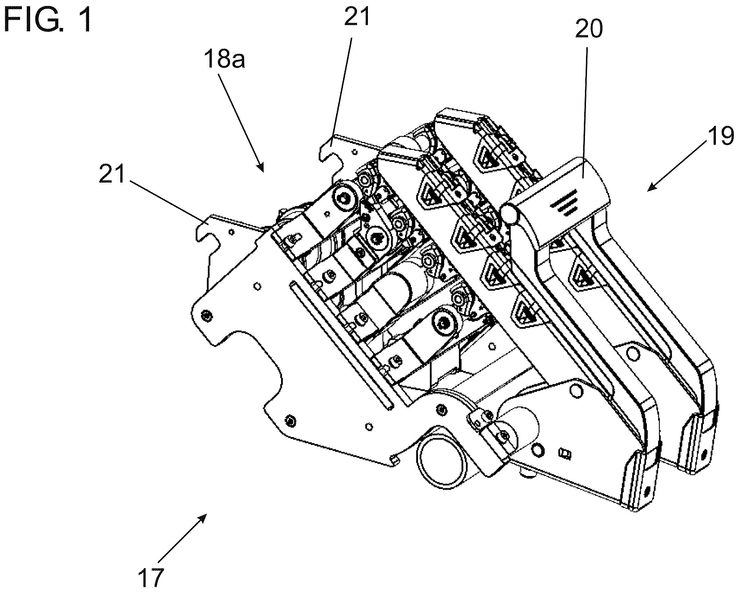

In Figur 1 ist in einer schematischen perspektivischen Darstellung ein einer hier nicht dargestellten Spinnstelle einer Textilmaschine zuordenbares Streckwerk 17 dargestellt, dass über Rasthaken 21 an der Textilmaschine festlegbar ist. Das Streckwerk 17 weist dabei ein Streckwerkoberteil 19 auf, das gelenkig mit einem Streckwerkunterteil 18a verbunden ist, wobei eine Verschwenkung über eine Betätigung eines Handgriffs 20 erfolgt.

In der in Figur 1 dargestellten Betriebsposition liegt das Streckwerkoberteil 19 mit vier in Verlaufsrichtung eines hier nicht dargestellten Faserbands durch das Streckwerk 17 hintereinander angeordneten Oberwalzen an den entsprechenden, angetriebenen Unterwalzen 2a, 2b des Streckwerkunterteils 18a an.

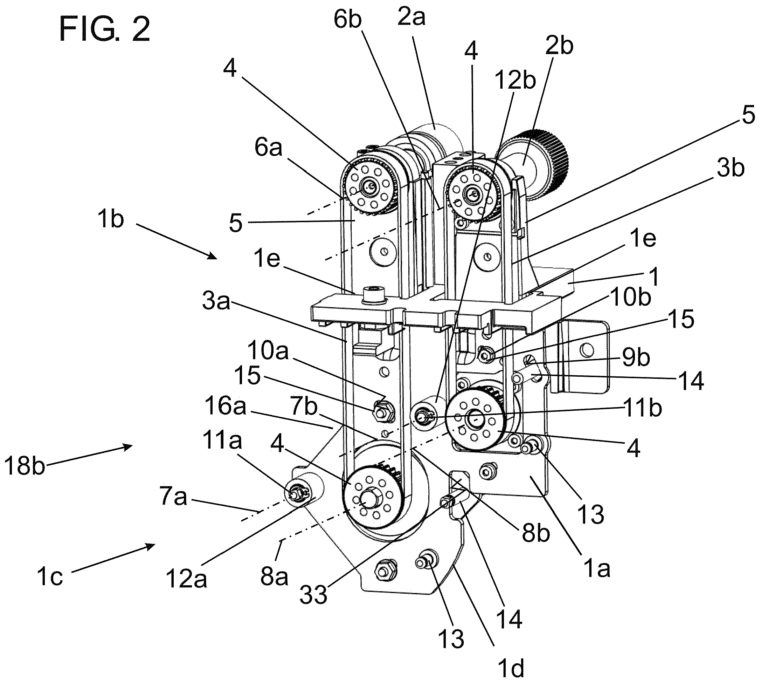

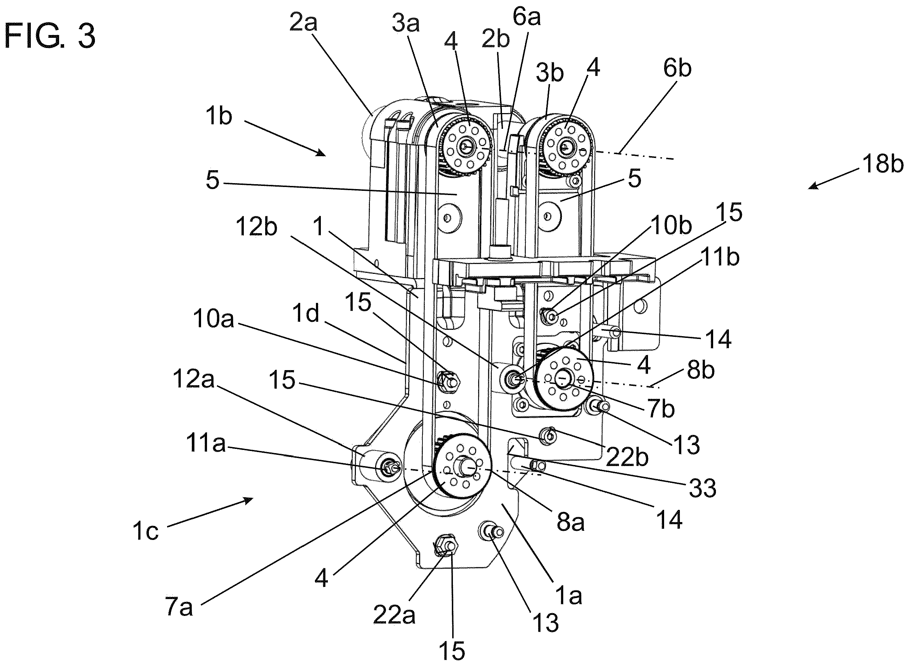

Eine zweite Ausführungsform eines Streckwerkunterteils 18b ist in den Figuren 2 und 3 in einer perspektivischen Ansicht dargestellt. Das Streckwerkunterteil 18b weist zwei Unterwalzen 2a, 2b auf, die über Unterwalzenlager 5 eines Unterwalzenträgers 1 drehbar an dem Unterwalzenträger 1 auf seiner Oberseite gelagert sind. Zum Antrieb der Unterwalzen 2a, 2b weist das Streckwerkunterteil 18b zwei jeweils einer Unterwalze 2a, 2b zugeordnete Antriebsmotoren 16a, 16b auf. Die Antriebsmotoren 16a, 16b sind dabei jeweils über einen Gelenkbolzen 11a, 11b, welche sich durch Lagerbuchsen 12a, 12b an einem Tragelement 1b des Unterwalzenträgers 1 erstrecken, schwenkbar an dem Tragelement 1b gelagert. Das Tragelement 1b ist plattenförmig ausgestaltet und erstreckt sich von einer Unterseite 1c des Unterwalzenträgers 1 vertikal zu diesem. Der Unterwalzenträger 1 ist nach diesem bevorzugten Ausführungsbeispiel einstückig mit dem Tragelement 1b ausgebildet, mit anderen Worten aus einem Stück mit dem Tragelement 1b ausgebildet. Nach einem nicht gezeigten bevorzugten Ausführungsbeispiel können der Unterwalzenträger 1 und das Tragelement 1b mehrteilig ausgestaltet und über übliche Kopplungs- bzw. Verbindungselement miteinander verbunden bzw. gekoppelt sein. Zur Übertragung der Antriebsbewegung der Antriebsmotoren 16a, 16b auf die Unterwalzen 2a, 2b dienen zwei jeweils ein Riemenrad 4 eines Antriebsmotors 16a, 16b und einer Unterwalze 2a, 2b umschlingende Antriebsriemen 3a, 3b. Diese erstrecken sich jeweils die Unterseite 1c und die Oberseite 1b des Unterwalzenträgers 1 querend durch einen jeweiligen Durchgang des Unterwalzenträgers 1

Zur Einstellung der Antriebsriemenspannung der Antriebsriemen 3a, 3b sind die Antriebsmotoren 16a, 16b über die Gelenkbolzen 11a, 11b vorgegebene Drehachsen 7a, 7b schwenkbar, wodurch der Abstand der Riemenräder 4 der Unterwalzen 2a, 2b zu den zugeordneten Riemenrädern 4 der Antriebsmotoren 16a, 16b einstellbar ist.

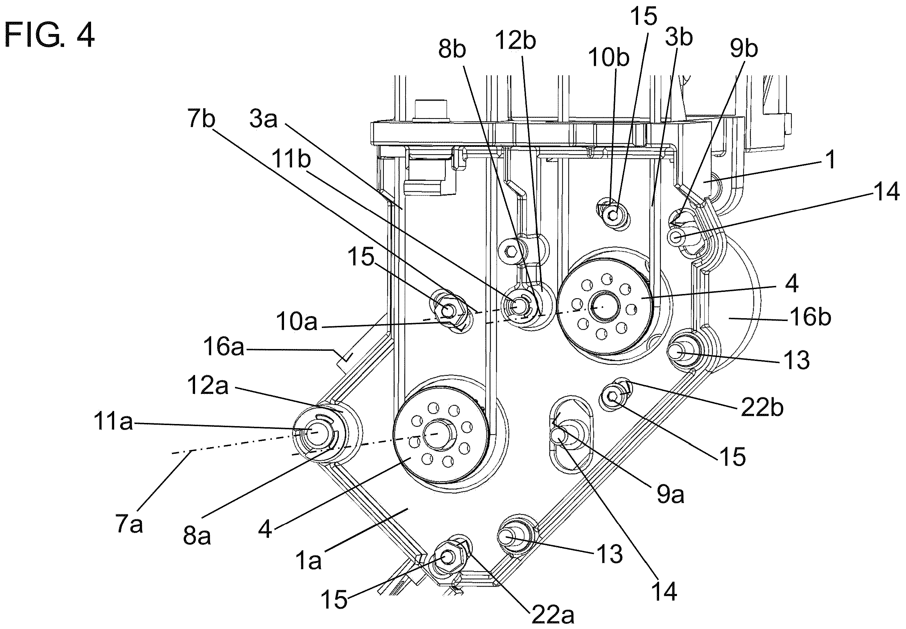

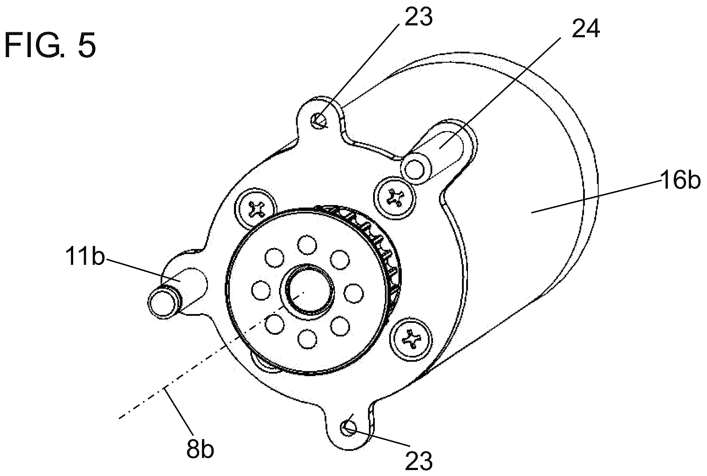

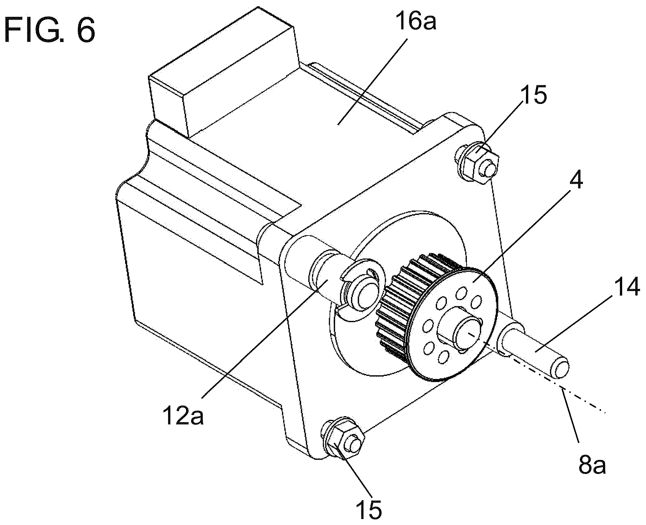

Zur Einstellung der Position der Antriebsmotoren 16a, 16b gegenüber den Unterwalzen 2a, 2b an dem Unterwalzenträger 1 sind dabei ortsfest an dem Tragelement 1b angeordnete Haltebolzen 13 sowie jeweils ein den jeweiligen Haltebolzen 13 zugeordnete Aufsteckbolzen 14 an den Antriebsmotoren 16a, 16b vorgesehen. Die Aufsteckbolzen 14 ragen dabei in dem in den Figuren 2 und 3 dargestellten Ausführungsbeispiel durch ein Langloch 9b bzw. eine Aussparung 33 und in dem in Figur 4 dargestellten Ausführungsbeispiel durch Langlöcher 9a, 9b an dem Tragelement 1b, sodass die Haltebolzen 13 und Aufsteckbolzen 14 in einer Ebene angeordnet und parallel zueinander ausgerichtet sind. Die Aussparung 33 unterscheidet sich dabei von dem Langloch 9b bzw. von den Langlöchern 9a, 9b dadurch, dass die Aussparung 33 bis zu einer Randseite des Tragelements 1b reicht und damit eine Randseite des Tragelements 1b bzw. des Unterwalzenträgers 1 ausbildet, um über die Randseite eine Zugänglichkeit zu ermöglichen. Die Verstellbewegung der Antriebsmotoren 16a, 16b ist dabei durch die Länge der Langlöcher 9a, 9b bzw. der Aussparung 33 begrenzt. Dabei definiert der Abstand der Haltebolzen 13 zum Aufsteckbolzen 14 die Position der Antriebsmotoren 16a, 16b an dem Tragelement 1b des Unterwalzenträgers 1, wobei die eingestellte Position der Antriebsmotoren 16a, 16b jeweils über Arretierungsschrauben 15 gesichert wird, welche durch weitere Langlöcher 10a, 10b, 22a, 22b hindurchragen und in Öffnungen 23 in den jeweiligen Antriebsmotoren 16a, 16b eingeschraubt werden, wodurch die Antriebsmotoren 16a, 16b in ihrer eingestellten Position klemmend an dem Tragelement 1b fixiert werden können (vgl. Figur 5 und 6).

In der in den Figuren 2 bis 4 dargestellten Mittenposition, in der die Aufsteckbolzen 14 - bezogen auf Figur 4 - im gleichen Abstand zu beiden Enden der Langlöcher 9a, 9b angeordnet sind, spannen die Drehachsen 7a, 7b mit den jeweiligen Antriebswellenachsen 8a, 8b der zugeordneten Antriebsmotoren 16a, 16b eine Ebene auf, welche senkrecht zu einer Ebene verläuft, die durch die Antriebswellenachsen 8a, 8b und die Rotationsachsen 6a, 6b der zugeordneten Unterwalzen 2a, 2b aufgespannt wird, wobei die Antriebswellenachsen 8a, 8b, die Rotationsachsen 6a, 6b und die Drehachsen 7a, 7b parallel zueinander verlaufen.

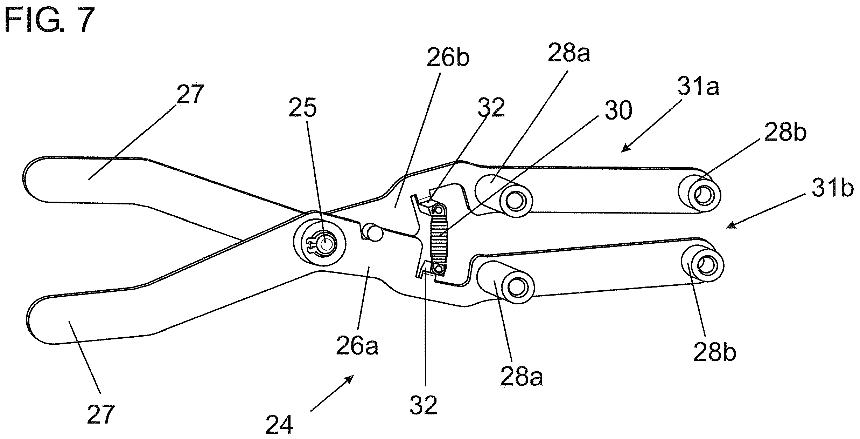

Zur Einstellung der Riemenspannung der Antriebsriemen 3a, 3b dient die in Figur 7 in einer perspektivischen Darstellung dargestellte Riemenspannzange 24. Diese weist zwei Zangenhälften 26a, 26b auf, welche über einen Gelenkbolzen 25 gelenkig miteinander verbunden sind. Einerseits des Gelenkbolzens 25 bilden die Zangenhälften 26a, 26b jeweils einen Handgriff 27 aus, wohingegen die Zangenhälften 26a, 26b auf der den Handgriffen 27 gegenüberliegenden Seiten jeweils zwei im Abstand voneinander angeordnete, als Aufsteckbuchsen 28a, 28b ausgebildete Funktionselemente aufweisen. Die Funktionselemente 28a, 28b bilden jeweils ein Funktionselementepaar 31a, 31b, welche durch ein als Zugfeder 30 ausgebildetes Vorspannelement mit einer definierten Vorspannung aufeinander zu vorgespannt sind. Aufgrund des unterschiedlichen Abstands der Funktionselemente 28a, 28b der Funktionselementepaare 31a, 31b von dem Gelenkbolzen 25 übertragen die Funktionselementepaare 31a, 31b unterschiedliche Vorspannkräfte über die Aufsteckbuchsen 28a, 28b.

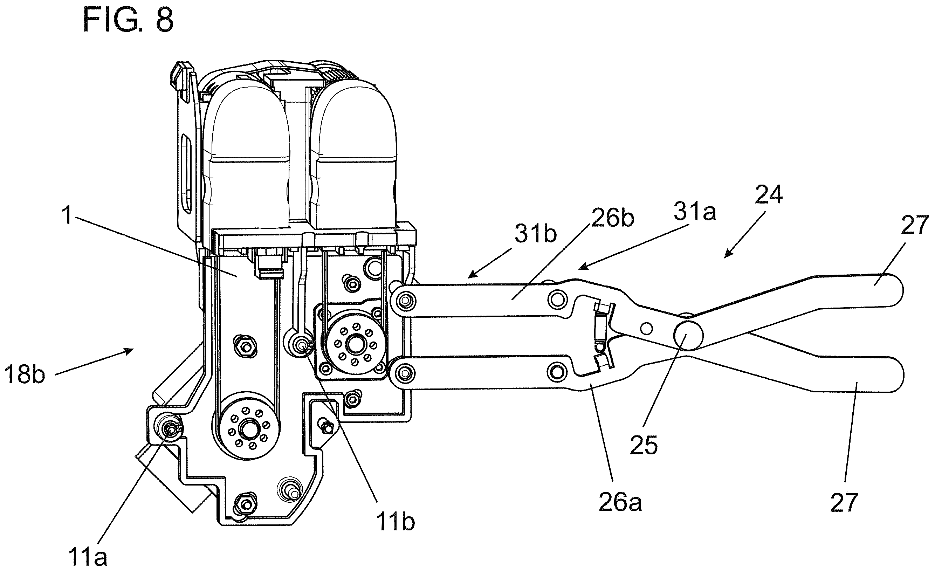

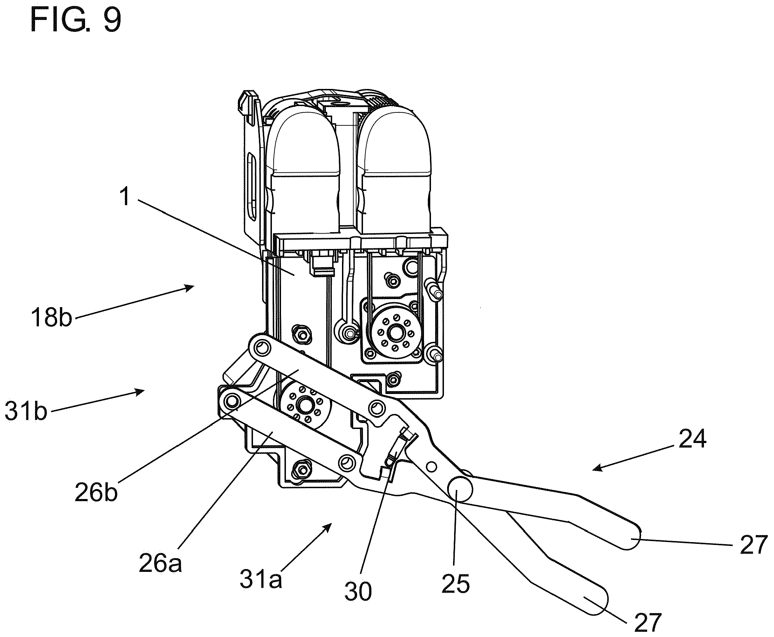

Die Aufsteckbuchsen 28a, 28b sind an die Aufsteckbolzen 14 und Haltebolzen 13 des Streckwerkunterteils 18b angepasst, sodass die Riemenspannzange 24, wie in den Figuren 8 und 9 dargestellt zur Einstellung der Riemenspannung der Antriebsriemen 3a, 3b genutzt werden kann. In dem in Figur 8 dargestellten Ausführungsbeispiel dient das Funktionselementepaar 31b zur Einstellung der Riemenspannung des die zweite Unterwalze 2b mit dem Antriebsmotor 16b verbindenden Antriebsriemens 3b. Aufgrund einer von der Riemenlänge des zweiten Antriebsriemens 3b abweichenden Riemenlänge des ersten Antriebsriemens 3a muss zur Erzielung der notwendigen Antriebsriemenspannung von der Riemenspannzange 24 eine abweichende Vorspannung auf die Aufsteckbolzen 14 und Haltebolzen 13 zur Einstellung des Antriebsmotors 16a aufgebracht werden. Zu diesem Zweck wird die Riemenspannzange 24 mit den Aufsteckbuchsen 28a des Funktionselementepaars 31a an dem den Antriebsmotor 16a zugeordneten Haltebolzen 13 und Aufsteckbolzen 14 angeordnet.

Die Vorspannung wird durch die im Bereich zwischen dem Gelenkbolzen 25 und den Funktionselementepaaren 31a, 31b an Haltern 32 der Zangenhälften 26a, 26b angeordnete Zugfeder 30 bestimmt. Die Zugfeder 30 ist dabei austauschbar an den Haltern 32 befestigt, sodass über einen Austausch der Zugfeder 30 die Riemenspannzange 24 zur Einstellung abweichender Vorspannungen verwendet werden kann.

### Bezugszeichenliste

| | | | |
|---|---|---|---|
| 1 | Unterwalzenträger | 15 | Arretierungsschraube |
| 1a | Tragelement | 16a, 16b | Antriebsmotor |
| 1b | Oberseite | 17 | Streckwerk |
| 1c | Unterseite | 18a, 18b | Streckwerkunterteil |
| 1d | Randseite | 19 | Streckwerkoberteil |
| 1e | Durchgang | 20 | Handgriff |
| 2a | erste Unterwalze | 21 | Rasthaken |
| 2b | zweite Unterwalze | 22a, 22b | weiteres Langloch |
| 3a | erster Antriebsriemen | 23 | Öffnungen |
| 3b | zweiter Antriebsriemen | 24 | Riemenspannzange |
| 4 | Riemenrad | 25 | Gelenkbolzen |
| 5 | Unterwalzenlager | 26a | erste Zangenhälfte |
| 6a, 6b | Rotationsachse (Unterwalzen) | 26b | zweite Zangenhälfte |
| 7a, 7b | Drehachse | 27 | Handgriff |
| 8a, 8b | Antriebswellenachse | 28a, 28b | Funktionselement (Aufsteckbuchse) |
| 9a, 9b | Langloch | | |
| 10a, 10b | weiteres Langloch | 30 | Vorspannelement (Zugfeder) |
| 11a, 11b | Gelenkbolzen | 31a, 31b | Funktionselementepaar |
| 12a, 12b | Lagerbuchse | 32 | Halter |
| 13 | Haltebolzen | 33 | Aussparung |
| 14 | Aufsteckbolzen | | |

## Patentansprüche

1. Streckwerk (17) für eine Spinnmaschine, mit mindestens zwei Walzenpaaren, die jeweils eine Oberwalze und eine Unterwalze (2a, 2b) aufweisen, und wenigstens einem Antriebsmotor (16a; 16b) zum Antrieb wenigstens einer der Unterwalzen (2a; 2b), wobei der wenigstens eine Antriebsmotor (16; 16b) und die von dem wenigstens einen Antriebsmotor (16; 16b) antreibbare Unterwalze (2a; 2b) an einem Unterwalzenträger (1) gelagert angeordnet sind, wobei der wenigstens eine über einen Antriebsriemen (3a; 3b) mit der Unterwalze (2a; 3b) verbundene Antriebsmotor (16a; 16b) zur Einstellung einer Antriebsriemenspannung abstandsveränderlich zur Unterwalze (2a; 2b) an dem Unterwalzenträger (1) angeordnet ist,
**dadurch gekennzeichnet, dass**
der wenigstens eine Antriebsmotor (16a; 16b) um eine Drehachse (7a; 7b) schwenkbar und in einer eingestellten Position festlegbar an dem Unterwalzenträger (1) gelagert ist, wobei die Drehachse (7a, 7b) derart an dem Unterwalzenträger (1) verläuft, dass eine Verschwenkung des Antriebsmotors (16a, 16b) um die Drehachse (7a, 7b) eine Abstandsänderung des Antriebsmotors (16a, 16b) von der Unterwalze (2a, 2b) bewirkt.

2. Streckwerk (17) nach Anspruch 1, **dadurch gekennzeichnet, dass** der wenigstens eine Antriebsmotor (16a; 16b) derart schwenkbar an dem Unterwalzenträger (1) gelagert ist, dass die Drehachse (7a; 7b), eine Antriebswellenachse (8a; 8b) des wenigstens einen Antriebsmotors (16a; 16b) und eine Rotationsachse (6a; 6b) der zugeordneten Unterwalze (2a; 2b) parallel zueinander angeordnet sind.

3. Streckwerk (17) nach Anspruch 1 oder 2, **dadurch gekennzeichnet, dass** der wenigstens eine Antriebsmotor (16a; 16b) zwischen einer einen maximalen Abstand zur Unterwalze (2a; 2b) festlegenden Endposition und einer einen minimalen Abstand zur Unterwalze (2a; 2b) festlegenden Anfangsposition verstellbar an dem Unterwalzenträger (1) angeordnet ist.

4. Streckwerk (17) nach einem oder mehreren der vorhergehenden Ansprüche, **dadurch gekennzeichnet, dass** der wenigstens eine Antriebsmotor (16a; 16b) derart schwenkbar an dem Unterwalzenträger (1) angeordnet ist, dass in einer einen übereinstimmenden Abstand von der Anfangs- und Endposition aufweisenden Mittenposition eine durch die Drehachse (7a; 7b) und die zugeordnete Antriebswellenachse (8a; 8b) aufgespannte Ebene senkrecht zu einer durch die zugeordnete Antriebswellenachse (8a; 8b) und die Rotationsachse (6a; 6b) der zugeordneten Unterwalze (2a; 2b) aufgespannte Ebene verläuft.

5. Streckwerk (17) nach einem oder mehreren der vorhergehenden Ansprüche, **dadurch gekennzeichnet, dass** der wenigstens eine Antriebsmotor (16a; 16b) einen sich parallel zu einem zugeordneten Haltebolzen (13) an dem Unterwalzenträger (1) erstreckenden Aufsteckbolzen (14) aufweist, wobei der Haltebolzen (13) und der zugeordnete Aufsteckbolzen (14) derart im Abstand voneinander angeordnet sind, dass deren Abstandsveränderung eine Verstellung des Antriebsmotors (16a; 16b) zwischen der Anfangsposition und der Endposition bewirkt.

6. Streckwerk (17) nach Anspruch 5, **dadurch gekennzeichnet, dass** sich der Aufsteckbolzen (14) durch eine Aussparung (9a; 9b; 33) an dem Unterwalzenträger (1) erstreckt.

7. Streckwerk (17) nach Anspruch 6, **dadurch gekennzeichnet, dass** die Aussparung (33) eine Randseite des Unterwalzenträgers (1) ausformt.

8. Streckwerk (17) nach einem oder mehreren der vorhergehenden Ansprüche, **dadurch gekennzeichnet, dass** der Unterwalzenträger (1) eine Ober- (1b) und eine Unterseite (1c) aufweist, wobei die Unterwalzen (2a; 2b) auf der Oberseite (1b) des Unterwalzenträgers (1) gelagert angeordnet sind, und ein von der Unterseite (1c) vertikal zu dieser abragendes Tragelement (1a) vorgesehen ist, an welchem der wenigstens eine Antriebsmotor (16a; 16b) gelagert ist, wobei sich der Antriebsriemen (3a; 3b) von dem Antriebsmotor (16a; 16b) bis zu der zugeordneten Unterwalze (2a; 2b) die Unter- (1c) und Oberseite (1b) des Unterwalzenträgers (1) querend erstreckt.

9. Streckwerk (17) nach Anspruch 8, **dadurch gekennzeichnet, dass** der Unterwalzenträger (1) wenigstens einen Durchgang (1e) aufweist, durch welchen sich der Antriebsriemen (3a; 3b) erstreckt.

10. Streckwerk (17) nach einem oder mehreren der vorhergehenden Ansprüche, **dadurch gekennzeichnet, dass** der Unterwalzenträger (1) wenigstens eine Aussparung (10a; 10b; 22a; 22b) zur Aufnahme wenigstens einer sich durch den Unterwalzenträger (1) erstreckenden, den wenigstens einen Antriebsmotor (16a; 16b) in der eingestellten Position festlegende Arretierungsschraube (15) aufweist.

11. System zur Spannung eines Antriebsriemens (3a; 3b) eines Streckwerks (17) **gekennzeichnet durch** ein Streckwerk (17) nach einem oder mehreren der Ansprüche 1 bis 10 und eine Riemenspannzange (24) zur Einstellung der Antriebsriemenspannung des Streckwerks (17), wobei die Riemenspannzange (24) zwei über einen Gelenkbolzen (25) verschwenkbar miteinander verbundenen Zangenhälften (26a, 26b) aufweist, deren einen Enden als Handgriffe (27) ausgebildet sind und deren anderen Enden jeweils ein, gemeinsam ein Funktionselementepaar (31a, 31b) bildendes Funktionselement (28a, 28b) aufweisen, die in derselben Bewegungsebene angeordnet und durch Betätigung der Zangenhälften (26a, 26b) aufeinander zu beweglich sind, wobei ein Vorspannelement (30), das die als Aufsteckbuchsen zur Aufnahme eines Haltebolzens (13) und eines Aufsteckbolzens (14) ausgebildete, sich senkrecht zur Bewegungsebene erstreckenden Funktionselemente (28a, 28b) mit einer definierten Vorspannkraft aufeinander zu vorspannt, wobei an der Riemenspannzange (24) angeordnete Aufsteckbuchsen (28a, 28b) an Aufsteckbolzen (14) und Haltebolzen (13) an dem Streckwerk (17) angepasst sind.

12. System nach Anspruch 11, **dadurch gekennzeichnet, dass** ein Vorspannelement (30) an der Riemenspannzange (24) derart ausgebildet ist, dass die an dem Haltebolzen (13) und dem Aufsteckbolzen (14) angeordnete Riemenspannzange (24) den Antriebsriemen (3a, 3b) mit einer vorgegebenen Riemenspannung vorspannt.

13. System nach Anspruch 11 oder 12, **dadurch gekennzeichnet, dass** das Streckwerk (17) zwei Walzenpaare mit jeweils einem mit einer Unterwalze (2a, 2b) verbundenen Antriebsmotor (16a, 16b) und die Riemenspannzange (24) zwei Funktionselementepaare (31a, 31b) zur Einstellung unterschiedlicher Riemenspannungen aufweist.

## Claims

1. Drafting arrangement (17) for a spinning machine, comprising at least two pairs of rollers, each having a top roller and a bottom roller (2a, 2b), and at least one drive motor (16a; 16b) for driving at least one of the bottom rollers (2a; 2b), wherein the at least one drive motor (16; 16b) and the bottom roller (2a; 2b) that can be driven by the at least one drive motor (16; 16b) are mounted on a bottom roller carrier (1), wherein the at least one drive motor (16a; 16b), which is connected to the bottom roller (2a; 3b) via a drive belt (3a; 3b), is arranged on the bottom roller carrier (1) so as to be changeable in distance from the bottom roller (2a; 2b) in order to set a drive belt tension,
**characterized in that**
the at least one drive motor (16a; 16b) is mounted on the bottom roller carrier (1) so as to be pivotable about a pivot axis (7a; 7b) and fixable in a set position, wherein the pivot axis (7a, 7b) extends on the bottom roller carrier (1) such that pivoting the drive motor (16a, 16b) about the pivot axis (7a, 7b) causes a change in the distance of the drive motor (16a, 16b) from the bottom roller (2a, 2b).

2. Drafting arrangement (17) according to claim 1, **characterized in that** the at least one drive motor (16a; 16b) is pivotably mounted on the bottom roller carrier (1) such that the pivot axis (7a; 7b), a drive shaft axis (8a; 8b) of the at least one drive motor (16a; 16b), and a rotation axis (6a; 6b) of the corresponding bottom roller (2a; 2b) are arranged in parallel with one another.

3. Drafting arrangement (17) according to claim 1 or claim 2, **characterized in that** the at least one drive motor (16a; 16b) is arranged on the bottom roller carrier (1) so as to be adjustable between an end position defining a maximum distance to the bottom roller (2a; 2b) and an initial position defining a minimum distance to the bottom roller (2a; 2b).

4. Drafting arrangement (17) according to one or more of the preceding claims, **characterized in that** the at least one drive motor (16a; 16b) is pivotably arranged on the bottom roller carrier (1) such that, in a center position at an equal distance from the initial position and the end position, a plane spanned by the pivot axis (7a; 7b) and the corresponding drive shaft axis (8a; 8b) extends perpendicularly to a plane spanned by the corresponding drive shaft axis (8a; 8b) and the rotation axis (6a; 6b) of the corresponding bottom roller (2a; 2b).

5. Drafting arrangement (17) according to one or more of the preceding claims, **characterized in that** the at least one drive motor (16a; 16b) has a slip-on bolt (14) extending in parallel with a corresponding retaining bolt (13) on the bottom roller carrier (1), wherein the retaining bolt (13) and the corresponding slip-on bolt (14) are arranged at a distance from one another such that their change in distance causes an adjustment of the drive motor (16a; 16b) between the initial position and the end position.

6. Drafting arrangement (17) according to claim 5, **characterized in that** the slip-on bolt (14) extends through a recess (9a; 9b; 33) in the bottom roller carrier (1).

7. Drafting arrangement (17) according to claim 6, **characterized in that** the recess (33) forms an edge of the bottom roller carrier (1).

8. Drafting arrangement (17) according to one or more of the preceding claims, **characterized in that** the bottom roller carrier (1) has an upper side (1b) and a lower side (1c), wherein the bottom rollers (2a; 2b) are mounted on the upper side (1b) of the bottom roller carrier (1), and a carrying element (1a) is provided which projects from the lower side (1c) vertically thereto, and on which the at least one drive motor (16a; 16b) is mounted, wherein the drive belt (3a; 3b) extends from the drive motor (16a; 16b) to the corresponding bottom roller (2a; 2b), traversing the lower side (1c) and the upper side (1b) of the bottom roller carrier (1).

9. Drafting arrangement (17) according to claim 8, **characterized in that** the bottom roller carrier (1) has at least one passage (1e) through which the drive belt (3a; 3b) extends.

10. Drafting arrangement (17) according to one or more of the preceding claims, **characterized in that** the bottom roller carrier (1) has at least one recess (10a; 10b; 22a; 22b) for receiving at least one locking screw (15) which extends through the bottom roller carrier (1) and fixes the at least one drive motor (16a; 16b) in the set position.

11. System for tensioning a drive belt (3a; 3b) of a drafting arrangement (17) **characterized by** a drafting arrangement (17) according to one or more of claims 1 to 10 and belt tensioner pliers (24) for setting the drive belt tension of the drafting arrangement (17), wherein the belt tensioner pliers (24) have two plier halves (26a, 26b) which are pivotably connected to one another via a hinge bolt (25), one ends of which are designed as handles (27) and the other ends of which each have a functional element (28a, 28b) jointly forming a pair of functional elements (31a, 31b) which are arranged in the same movement plane and can be moved toward one another by actuating the plier halves (26a, 26b), wherein a pretensioning element (30) which pretensions the functional elements (28a, 28b), which are designed as slip-on bushings for receiving a retaining bolt (13) and a slip-on bolt (14) and extend perpendicularly to the movement plane, toward one another with a defined pretensioning force, wherein slip-on bushings (28a, 28b) arranged on the belt tensioner pliers (24) are adapted to slip-on bolts (14) and retaining bolts (13) on the drafting arrangement (17).

12. System according to claim 11, **characterized in that** a pretensioning element (30) on the belt tensioner pliers (24) is designed such that the belt tensioner pliers (24) arranged on the retaining bolt (13) and on the slip-on bolt (14) pretension the drive belt (3a, 3b) with a predetermined belt tension.

13. System according to claim 11 or claim 12, **characterized in that** the drafting arrangement (17) has two pairs of rollers each comprising a drive motor (16a, 16b) connected to a bottom roller (2a, 2b), and the belt tensioner pliers (24) have two pairs of functional elements (31a, 31b) for setting different belt tensions.

## Revendications

1. Banc d'étirage (17) pour un métier à filer, comportant au moins deux paires de cylindres qui présentent respectivement un cylindre supérieur et un cylindre inférieur (2a, 2b), et au moins un moteur d'entraînement (16a ; 16b) pour l'entraînement d'au moins l'un des cylindres inférieurs (2a ; 2b), dans lequel l'au moins un moteur d'entraînement (16 ; 16b) et le cylindre inférieur (2a ; 2b) entraîné par l'au moins un moteur d'entraînement (16 ; 16b) sont disposés de manière à être montés sur un support pour cylindres inférieurs (1), dans lequel l'au moins un moteur d'entraînement (16a ; 16b) relié au cylindre inférieur (2a ; 3b) par l'intermédiaire d'une courroie d'entraînement (3a ; 3b) est disposé sur le support pour cylindres inférieurs (1) à une distance variable du cylindre inférieur (2a ; 2b) pour le réglage d'une tension de courroie d'entraînement,
**caractérisé en ce que**
l'au moins un moteur d'entraînement (16a ; 16b) est monté sur le support pour cylindres inférieurs (1) de manière à pouvoir pivoter autour d'un axe de rotation (7a ; 7b) et à pouvoir être fixé dans une position réglée, dans lequel l'axe de rotation (7a, 7b) s'étend sur le support pour cylindres inférieurs (1) de telle sorte qu'un pivotement du moteur d'entraînement (16a, 16b) autour de l'axe de rotation (7a, 7b) provoque une modification de la distance entre le moteur d'entraînement (16a, 16b) et le cylindre inférieur (2a, 2b).

2. Banc d'étirage (17) selon la revendication 1, **caractérisé en ce que** l'au moins un moteur d'entraînement (16a ; 16b) est monté de manière à pouvoir pivoter sur le support pour cylindres inférieurs (1) de telle sorte que l'axe de rotation (7a ; 7b), un axe d'arbre d'entraînement (8a ; 8b) de l'au moins un moteur d'entraînement (16a ; 16b) et un axe de rotation (6a ; 6b) du cylindre inférieur (2a ; 2b) associé sont disposés parallèlement les uns aux autres.

3. Banc d'étirage (17) selon la revendication 1 ou 2, **caractérisé en ce que** l'au moins un moteur d'entraînement (16a ; 16b) est disposé sur le support pour cylindres inférieurs (1) de manière à pouvoir être réglé entre une position finale définissant une distance maximale par rapport au cylindre inférieur (2a ; 2b) et une position initiale définissant une distance minimale par rapport au cylindre inférieur (2a ; 2b).

4. Banc d'étirage (17) selon l'une ou plusieurs des revendications précédentes, **caractérisé en ce que** l'au moins un moteur d'entraînement (16a ; 16b) est disposé sur le support pour cylindres inférieurs (1) de manière à pouvoir pivoter de telle sorte que, dans une position médiane présentant une distance concordante par rapport à la position initiale et à la position finale, un plan défini par l'axe de rotation (7a ; 7b) et l'axe d'arbre d'entraînement (8a ; 8b) associé s'étend perpendiculairement à un plan défini par l'axe d'arbre d'entraînement (8a ; 8b) associé et l'axe de rotation (6a ; 6b) du cylindre inférieur (2a ; 2b) associé.

5. Banc d'étirage (17) selon l'une ou plusieurs des revendications précédentes, **caractérisé en ce que** l'au moins un moteur d'entraînement (16a ; 16b) présente un boulon d'emboîtement (14) s'étendant parallèlement à un boulon de retenue (13) associé sur le support pour cylindres inférieurs (1), dans lequel le boulon de retenue (13) et le boulon d'emboîtement (14) associé sont disposés à une distance l'un de l'autre de telle sorte que leur modification de distance provoque un déplacement du moteur d'entraînement (16a ; 16b) entre la position initiale et la position finale.

6. Banc d'étirage (17) selon la revendication 5, **caractérisé en ce que** le boulon d'emboîtement (14) s'étend à travers un évidement (9a ; 9b ; 33) sur le support pour cylindres inférieurs (1).

7. Banc d'étirage (17) selon la revendication 6, **caractérisé en ce que** l'évidement (33) forme un côté de bordure du support pour cylindres inférieurs (1).

8. Banc d'étirage (17) selon l'une ou plusieurs des revendications précédentes, **caractérisé en ce que** le support pour cylindres inférieurs (1) présente une face supérieure (1b) et une face inférieure (1c), dans lequel les cylindres inférieurs (2a ; 2b) sont montés sur la face supérieure (1b) du support pour cylindres inférieurs (1), et un élément de support (1a) dépassant de la face inférieure (1c) verticalement par rapport à celle-ci est prévu, sur lequel l'au moins un moteur d'entraînement (16a ; 16b) est monté, dans lequel la courroie d'entraînement (3a ; 3b) s'étend depuis le moteur d'entraînement (16a ; 16b) jusqu'au cylindre inférieur (2a ; 2b) associé en traversant la face inférieure (1c) et la face supérieure (1b) du support pour cylindres inférieurs (1).

9. Banc d'étirage (17) selon la revendication 8, **caractérisé en ce que** le support pour cylindres inférieurs (1) présente au moins un passage (1e) à travers lequel s'étend la courroie d'entraînement (3a ; 3b).

10. Banc d'étirage (17) selon l'une ou plusieurs des revendications précédentes, **caractérisé en ce que** le support pour cylindres inférieurs (1) présente au moins un évidement (10a ; 10b ; 22a ; 22b) pour la réception d'au moins une vis d'arrêt (15) s'étendant à travers le support pour cylindres inférieurs (1) et fixant l'au moins un moteur d'entraînement (16a ; 16b) dans la position réglée.

11. Système pour la tension d'une courroie d'entraînement (3a ; 3b) d'un banc d'étirage (17) **caractérisé par** un banc d'étirage (17) selon l'une ou plusieurs des revendications 1 à 10 et une pince de tension de courroie (24) pour le réglage de la tension de courroie d'entraînement du banc d'étirage (17), dans lequel la pince de tension de courroie (24) présente deux moitiés de pince (26a, 26b) reliées l'une à l'autre de manière à pouvoir pivoter par l'intermédiaire d'un boulon d'articulation (25), dont les premières extrémités sont conçues comme des poignées (27) et dont les autres extrémités présentent respectivement un élément fonctionnel (28a, 28b) formant ensemble une paire d'éléments fonctionnels (31a, 31b) qui sont disposés dans le même plan de mouvement et peuvent être déplacés l'un vers l'autre par actionnement des moitiés de pince (26a, 26b), dans lequel un élément de précontrainte (30), lequel doit précontraindre avec une force de précontrainte définie les éléments fonctionnels (28a, 28b) réalisés comme des douilles d'emboîtement pour la réception d'un boulon de retenue (13) et d'un boulon d'emboîtement (14) et s'étendant perpendiculairement au plan de mouvement l'un vers l'autre, dans lequel des douilles d'emboîtement (28a, 28b) disposées sur la pince de tension de courroie (24) sont adaptées à des boulons d'emboîtement (14) et à des boulons de retenue (13) sur le banc d'étirage (17).

12. Système selon la revendication 11, **caractérisé en ce qu'**un élément de précontrainte (30) est réalisé sur la pince de tension de courroie (24) de telle sorte que la pince de tension de courroie (24) disposée sur le boulon de retenue (13) et le boulon d'emboîtement (14) précontraint la courroie d'entraînement (3a, 3b) avec une tension de courroie prédéterminée.

13. Système selon la revendication 11 ou 12, **caractérisé en ce que** le banc d'étirage (17) présente deux paires de cylindres comportant respectivement un moteur d'entraînement (16a, 16b) relié à un cylindre inférieur (2a, 2b) et la pince de tension de courroie (24) présente deux paires d'éléments fonctionnels (31a, 31b) pour le réglage de différentes tensions de courroie.
